# EUROPEAN PATENT APPLICATION

(11) **EP 3 767 848 A1**
(43) Date of publication of application: **20.01.2021**
(21) Application number: 19767237.1
(22) Date of filing: 28.02.2019
(51) Int. Cl.: H04J 14/02

(54) **FEEDBACK TUNING METHOD AND DEVICE FOR BEYOND-100M WDM TRANSMISSION SYSTEM**

(30) Priority: 13.03.2018 CN 201810203441
(71) Applicant: ZTE Corporation, Shenzhen, Guangdong 518057 (CN)
(72) Inventor: GAO, Lidong, Shenzhen, Guangdong 518057 (CN)
(74) Representative: Studio Torta S.p.A.
(86) International application number: PCT/CN2019/076532
(87) International publication number: WO 2019/174476

(57) **Abstract**

Disclosed are a method and a device for feedback tuning of a beyond 100G WDM transmission system, relating to the field of WDM optical communication. The method includes: acquiring a bit error rate before correction of a link from a downstream of the link; determining whether the link meets a transmission requirement of the beyond 100G service according to the bit error rate before correction; and adjusting a transmitter-side parameter used for optical signal transmission at an upstream of the link when it is determined that the link does not meet the transmission requirement of the beyond 100G service.

## Description

### CROSS-REFERENCE TO RELATED APPLICATION

This application claims a priority of a Chinese patent application with application No. 201810203441.X, filed before State Intellectual Property Office on March 13, 2018, and titled "Method and Device for Feedback Tuning of beyond 100G WDM Transmission System", the entire contents of which are incorporated herein by reference.

### TECHNICAL FIELD

This application relates to the field of wavelength division multiplexing(WDM) optical communication, in particular to a method and a device for feedback tuning of a beyond 100G WDM transmission system.

### BACKGROUND

With a development of society, a demand for communication system bandwidth is increasing. Especially with application of 5G and the prosperity and development of the Internet, Internet companies have higher and higher requirements for the bandwidth and network stability of data communication networks. In this context, application scenarios of beyond 100G WDM transmission systems such as single-wave 200G, 400G and so forth are increasing. Compared with 10G bandwidth environment, requirements for such indexes as optical signal noise ratio (OSNR) of beyond 100G system etc., are higher and higher. For example, an OSNR requirement of 10G system is 12dB, 11dB for 100G system, and an OSNR requirement of of 200G system is 17dB. At a low speed below 100G, the OSNR of communication system may easily meet the requirement of 12dB, and the channel has a large redundancy. However, with the application of 200G or even higher speed services, the OSNR of a general system is about 20dB, and an OSNR redundancy of the communication system is obviously insufficient. In addition, with the use of the communication system, long-distance optical fiber will be cut off in many cases, and then fused again. This operation will lead to an increasing loss of the optical fiber, which will lead to the worse OSNR of the whole optical communication system.

Therefore, the ability of optical system to automatically adjust OSNR is particularly important.

### SUMMARY

According to some embodiments of the present disclosure, a method and a device for feedback tuning of a beyond 100G WDM transmission system are provided, to solve the problem that an optical system cannot support the transmission of the beyond 100G high-speed service.

According to some embodiments of the present disclosure, a method for feedback tuning of a beyond 100G WDM transmission system is provided, including:
acquiring an bit error rate before correction of a link from a downstream of the link;
determining whether the link meets a transmission requirement of a beyond 100G service according to the bit error rate before correction; and
adjusting an transmitter-side parameter used for optical signal transmission at an upstream of the link when it is determined that the link does not meet the transmission requirement of a beyond 100G service.

According to some embodiments of the present disclosure, a device for feedback tuning of a beyond 100G WDM transmission system is provided, including:
an acquisition module, configured to acquire a bit error rate before correction of a link sent from a downstream of the link;
a judgement module, configured to determine whether the link meets a transmission requirement of a beyond 100G service according to the bit error rate before correction;
an adjustment module, configured to adjust an transmitter-side parameter used for optical signal transmission at an upstream of the link when it is determined that the link does not meet the transmission requirement of the beyond 100G service.

According to some embodiments of the present disclosure, an apparatus for feedback tuning of a beyond 100G WDM transmission system is provided, including: a processor and a memory coupled with the processor; herein the memory stores a program for feedback tuning of the beyond 100G WDM transmission system which is executable on the processor, and the program for feedback tuning of the beyond 100G WDM transmission system implements steps of the above-mentioned method for feedback tuning of the beyond 100G WDM transmission system when the program is executed by the processor.

According to some embodiments of the present disclosure, a system for feedback tuning of a beyond 100G WDM transmission system is provided, including:
a service single-board for a downstream of a link, configured to detect an optical signal from an upstream of the link to obtain a bit error rate before correction of the link, and insert the bit error rate before correction into the optical signal sent to the upstream of the link and send the optical signal to the upstream of the link;
a service single-board for the upstream of the link, configured to detect the optical signal from the service single-board for the downstream of the link to obtain the bit error rate before correction of the link and send the bit error rate before correction to a network management server;
the network management server, configured to acquire the bit error rate before correction of the link sent from the downstream of the link by using the service single-board for the upstream of the link, determine whether the link meets the transmission requirement of the beyond 100G service according to the bit error rate before correction, and adjust the transmitter-side parameter used for optical signal transmission at the upstream of the link when it is determined that the link does not meet the transmission requirement of the beyond 100G service.

According to some embodiments of the present disclosure, a storage medium is provided, which stores a program for feedback tuning of a beyond 100G WDM transmission system, herein the program for feedback tuning of the beyond 100G WDM transmission system implements steps of the above method for feedback tuning of the beyond 100G WDM transmission system when the program is executed by a processor.

### BRIEF DESCRIPTION OF DRAWINGS

FIG. 1 is a flow chart of feedback tuning of a beyond 100G WDM transmission system provided by an embodiment of the present disclosure;
Fig. 2 is a block diagram of a device for feedback tuning of the beyond 100G WDM transmission system provided by an embodiment of the present disclosure;
Fig. 3 is a schematic diagram of reverse insertion of downstream receiver-side provided by an embodiment of the present disclosure;
Fig. 4 is a flow chart of reverse insertion of a downstream receiver-side provided by an embodiment of the present disclosure;
Fig. 5 is a schematic diagram of overhead field used for reverse insertion of information provided by an embodiment of the present disclosure;
Fig. 6 is a diagram of a detection module at an upstream receiver-side provided by an embodiment of the present disclosure;
Fig. 7 is a control flow chart of a core module provided by an embodiment of the present disclosure;
Fig. 8 is a structural diagram of an optical communication system provided by an embodiment of the present disclosure;
Fig. 9 is a structural composition diagram of a feedback system provided by an embodiment of the present disclosure;
Fig. 10 is a physical connection diagram of various components provided by an embodiment of the present disclosure.

### DETAILED DESCRIPTION

The preferred embodiments of the present disclosure will be described in detail with reference to the drawings. It should be understood that the embodiments described below are only used to illustrate and explain the present disclosure, and are not intended to limit the present disclosure.

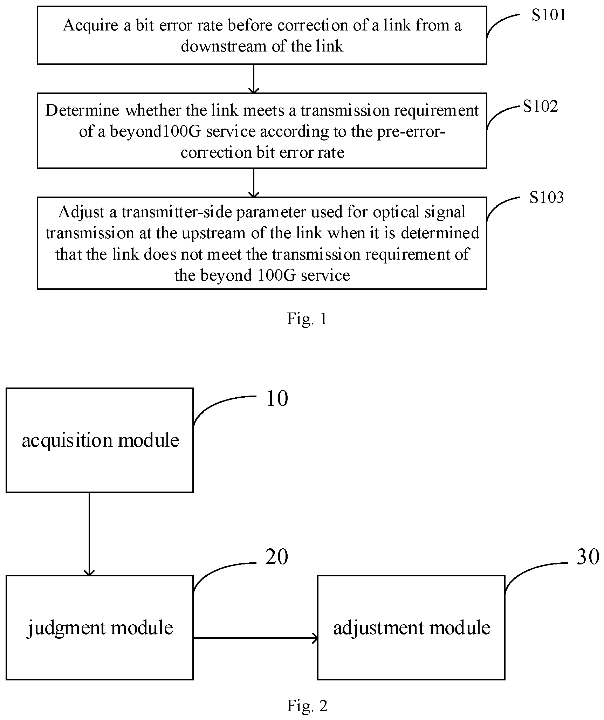

Fig. 1 is a flow chart of feedback tuning of a beyond 100G WDM transmission system provided by an embodiment of the present disclosure. As shown in Fig. 1, the steps include the following content.

At step S101, a bit error rate before correction of a link from a downstream of the link is acquired.

Before step S101, an optical signal from an upstream of the link is detected at the downstream of the link to acquire the bit error rate before correction, and the bit error rate before correction is inserted into the optical signal sent to the upstream of the link. When step S101 is executed, the optical signal sent from the downstream of the link to the upstream of the link is detected, to obtain the bit error rate before correction inserted into the optical signal at the downstream of the link.

Alternatively, before step S101, the obtained bit error rate before correction may also be encoded at the downstream of the link according to a preset coding and decoding rule table, and then the encoded information is inserted into the optical signal sent to the upstream of the link. When step S101 is executed, the optical signal sent from the downstream of the link to the upstream of the link is detected to obtain the encoded information, and the bit error rate before correction of the link corresponding to the encoded information is obtained according to the preset coding and decoding rule table.

At step S102, whether the link meets a transmission requirement of abeyond 100G service is determined according to the bit error rate before correction.

Whether the bit error rate before correction is within a range of a preset expected bit error rate before correction is determined, if so, determining that the link meets the transmission requirement of the beyond 100G service, and if not, determining that the link does not meet the transmission requirement of the beyond 100G service.

At step S103, a transmitter-side parameter used for optical signal transmission at the upstream of the link is adjusted when it is determined that the link does not meet the transmission requirement of the beyond 100G service.

The transmitter-side parameter includes a roll-off factor, and the roll-off factor is adjusted according to a performance of an optical module at the upstream of the link.

The transmitter-side parameter further includes a transmission optical power, and if the bit error rate before correction is not within a range of an expected bit error rate before correction by adjusting the roll-off factor, the transmission optical power is adjusted under the requirement of maintaining the stability of the WDM transmission system.

The transmission parameter further includes an Optical Amplifier(OA) gain, and if the bit error rate before correction is not within the range of the expected bit error rate before correction by adjusting the roll-off factor and the transmission optical power, the OA gain and the transmission optical power are adjusted according to states of all one-boards of the WDM transmission system.

Those of ordinary skill in the art may understand that all or part of the steps in the method for implementing the above embodiments may be completed by instructing related hardware through a program, and the program may be stored in a computer readable storage medium.

According to some embodiments of the present disclosure, a storage medium may also be provided, which storing a program for feedback tuning of a beyond 100G WDM transmission system, and the program for feedback tuning of the beyond 100G WDM transmission system implements the steps of the above method for feedback tuning of the beyond 100G WDM transmission system when the program is executed by a processor. The storage medium may include ROM/RAM, magnetic disk, optical disk and U disk.

Fig. 2 is a block diagram of a device for feedback tuning of a beyond 100G WDM transmission system provided by an embodiment of the present disclosure. As shown in Fig. 2, the device includes:
an acquisition module, configured to acquire a bit error rate before correction of a link sent from a downstream of the link;
a judgment module, configured to determine whether the link meets a transmission requirement of a beyond 100G service according to the bit error rate before correction; and
an adjustment module, configured to adjust a transmitter-side parameter used for optical signal transmission at an upstream of the link when it is determined that the link does not meet the transmission requirement of the beyond 100G service.

The device may be arranged on a network management server, and work like this:
The acquisition module acquiring the bit error rate before correction of the link sent from the downstream of the link via the upstream of the link, the judgment module determining that the link does not meet the transmission requirement of the beyond 100G service when it is determined that the bit error rate before correction is not within a range of an expected bit error rate before correction, and then the adjustment module adjusting the transmitter-side parameter.

According to some embodiments of the present disclosure, an apparatus for feedback tuning of a beyond 100G WDM transmission system is further provided, which includes a processor and a memory coupled with the processor; herein the memory stores a program for feedback tuning of the beyond 100G WDM transmission system executable on the processor, and the program for feedback tuning of the beyond 100G WDM transmission system implements the steps of the above-mentioned method for feedback tuning of the beyond 100G WDM transmission system when the program is executed by the processor.

According to some embodiments of the present disclosure, a beyond 100G WDM transmission system is further provided, including:
a service single-board for a downstream of a link, configured to detect an optical signal from an upstream of the link to obtain a bit error rate before correction of the link, and insert the bit error rate before correction or a coding information into the optical signal sent to the upstream of the link and send the optical signal to the upstream of the link.
a service single-board for the upstream of the link, configured to detect the optical signal from the service single-board for the downstream of the link to obtain the bit error rate before correction of the link and send the bit error rate before correction to a network management server;
the network management server, configured to acquire the bit error rate before correction of the link from the downstream of the link by using the service single-board for the upstream of the link, determine whether the link meets a transmission requirement of the beyond 100G service according to the bit error rate before correction, and adjust a transmitter-side parameter used for optical signal transmission at the upstream of the link when it is determined that the link does not meet the transmission requirement of the beyond 100G service.

The embodiment of the present disclosure is applicable to communication networks which are more sensitive to OSNR of optical system and adopting a 16QAM debugging mode etc., such as Internet Data Center(IDC) network with point-to-point single-span networking in the field of government and enterprise networks.

The embodiment of the present disclosure is committed to solve the problem that in the optical system the optical fiber loss may increase continuously with the use of the communication system, resulting in the whole channel unable to support the propagation of 200G or even higher speed services. Through the statistics of the bit error rate before correction at the receiver-side, a self-feedback regulation network is built to realize the self-regulation network of the optical system, so as to further ensure the communication quality and application implementation of the beyond 100G optical communication network.

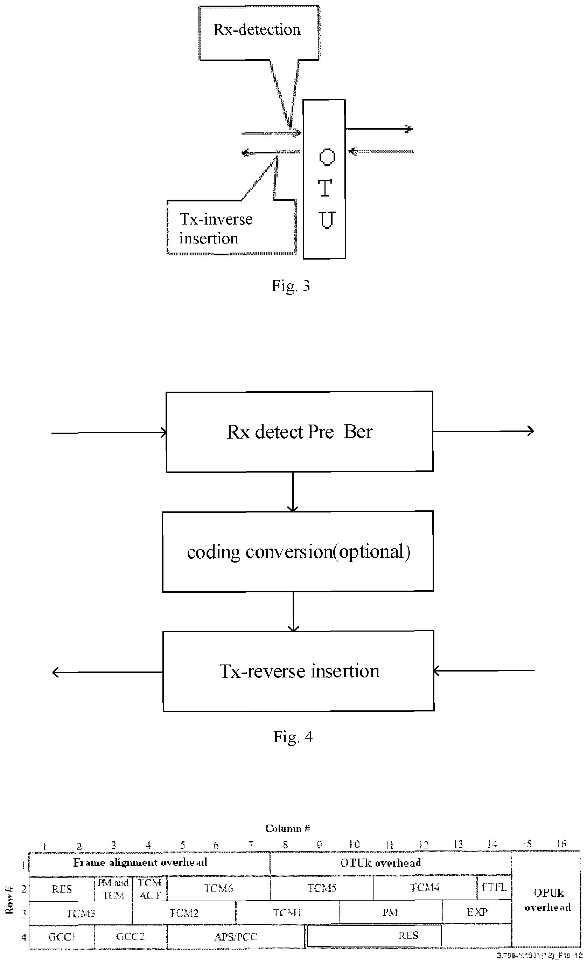

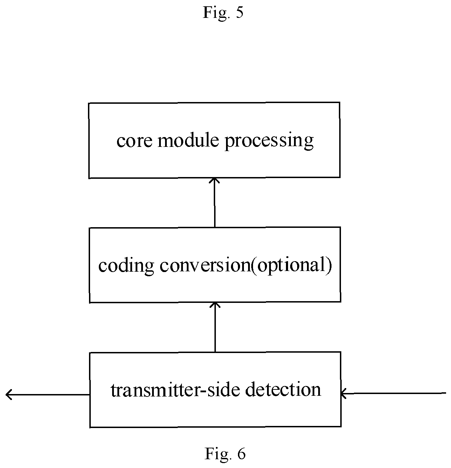

According to some embodiments of the present disclosure, the system for feedback tuning based on the bit error rate before correction includes the following modules:
(1) a detection part for the bit error rate before correction at the receiver-side for the downstream, which is responsible for the statistical feedback of the bit error rate before correction, and may be arranged on the service single-board at the downstream of the link. Its principle is shown in Fig. 3, and its reverse insertion process is shown in Fig. 4.
An Optical Transform Unit(OUT) at the downstream includes:
a Rx-detection part (i.e., a detection part at the receiver-side of the downstream), which receives the optical signal transmitted from the upstream and detects the bit error rate before correction;
a Tx-reverse insertion part (i.e., a reverse insertion part at the transmitter-side of the downstream), which inserts the bit error rate into the overhead field shown in Fig. 5.
To save optical transport network(OTN) retention overhead, the OUT at the downstream may also include:
a coding conversion part, which encodes according to a preset coding and decoding rule table, the bit error rate detected by the Rx-detection part to obtain a coding result, which is used by the Tx- reverse insertion part to insert into the overhead field shown in Fig. 5.
Considering the stability of the optical system, the feedback adjustment of the optical system should not be adjusted at a very fast frequency in the process of reverse insertion at the receiver-side, so it is set to detect the reverse insertion every 5 seconds. At present, the embodiment of the present disclosure temporarily uses 9-12 columns at the 4th row of the OTN reserved overhead as the overhead fields for reverse insertion, as shown in Fig. 5. In the process of reverse insertion, in order to save the use of the OTN reserved overhead, reverse insertion may be performed after coding. After receiving the corresponding codes, the receiver-side at the upstream decodes according to the coding rule. The coding rule may be adjusted according to the specific condition, so as to achieve the purpose of evaluating communication quality at both the transmitter-side and the receiver-side. The encoding and decoding rules are shown in table 1.

**Table 1. coding and decoding rule table**

| A value of the overhead field | Meaning |
|---|---|
| 0 | 0 |
| 1 | <=1e-10 |
| 2 | 1e-10<Pre _ber<=1e-5 |
| 3 | 1e-5<Pre_ber<=1e-4 |
| 4 | 1e-4<Pre _ber<=1e-3 |
| 5 | 1e-3< Pre_ber<=1e-2 |
| : | Reseve |
| : | Reseve |
| 0xFF | Invalid value |

(2) a detection module at receiver-side of the upstream, which is responsible for detecting an overhead information for reverse insertion at the downstream and may be arranged on the service single-board at the upstream of the link. The processing flow for the detection module as shown in Fig. 6 includes:
the Rx-detection part, which receives the optical signal transmitted from the downstream and detects the bit error rate before correction for inverse insertion at the downstream, so as to adjust by a core processing module (or core module) the transmission parameter.
If the encoding mode is adopted at the downstream, the detection module at the receiver-side of the upstream further includes:
a coding conversion part, configured to decode according to the preset coding and decoding rule table, the coding result subjected to the reverse insertion after upstream coding, to obtain the bit error rate before correction detected at the downstream, so that the core processing module may adjust the transmission parameter.
(3) the core processing module, which is responsible for logic determination, and may be arranged in the network management server. the core processing module determines to adjust the optical power, roll-off factor, OA(Optical Amplifier) gain and so on of the transmitter-side by collecting data information of the bit error rate before correction at the receiver-side. In the optical communication system, not only the useful signal but also the white noise are amplified in the optical amplification process, and the gain of OA is appropriately reduced, which will reduce the noise of the system to a certain extent, and then improve the OSNR at the receiver-side of the system. With regard to the adjustment mode at the transmitter-side, it needs to be determined and specified by the central algorithm, and the detailed process is as follows:
a) determining whether the current bit error rate before correction is within a range [L_Level, H_Level] specified by the user, such as [1×10⁻⁵, 1 ×10⁻³], adjustment is performed if the current bit error rate before correction is not within the specified range, and the roll-off factor of Tx(transmitter-side) is first adjusted. Since the roll-off factor does not involve the luminous power and OA amplification, and will not affect other channels, the roll-off factor is adjusted first. The specific adjustment mode and range should be determined according to the performance of the optical module.
b) adjusting the luminous power when it is found that the adjustment of roll-off factor is invalid. The adjustment range of the luminous power should be set within the range that does not affect the stability of the whole system.
c) determining whether when it is found that the adjustment of luminous power is still invalid.

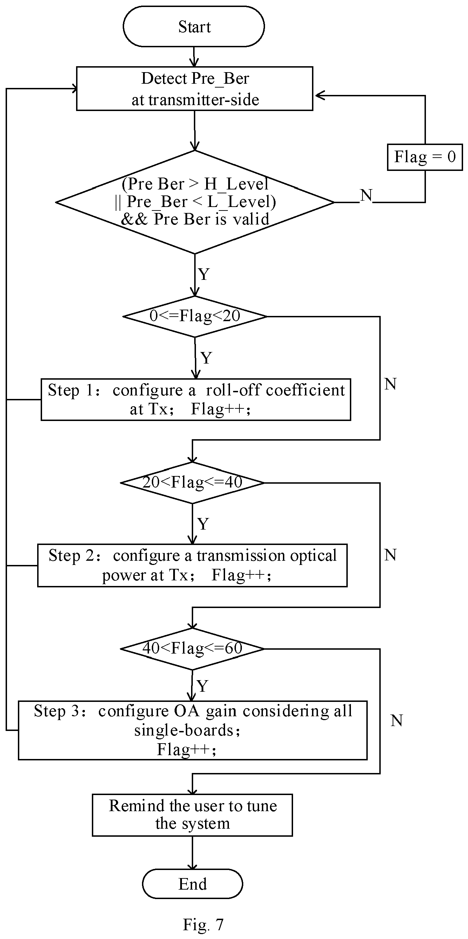

The logic processing block diagram of the core processing module is shown in Fig. 7, and the steps include the following content.
At Step 1, the receiver-side for the upstream detects the bit error rate before correction Pre_Ber subjected to inverse insertion at the downstream.
At Step 2, if the Pre_Ber is valid and the Pre_Ber is within the range [L_Level, H_Level] specified by the user, a Flag of adjustment time is set to 0; if the Pre_Ber is valid and the Pre_Ber is greater than H_Level or less than L_Level, it means that it is necessary to adjust the optical power, the roll-off factor and the OA gain at the transmitter-side, and then the range of Flag is determined.
At Step 3, if the Flag is within the range of [0,20], the roll-off factor at the transmitter-side is configured according to the performance of the optical module and timing is continued (i.e., Flag++).
At Step 4: if the Flag is within the range of (20,40], it means that the Pre_Ber is still not within the range specified by the user after adjusting the roll-off factor within [0,20]. At this time, the transmission optical power is configured and timing is continued (i.e., Flag++) without affecting the stability of the whole system.
At Step 5, if the Flag is within the range of (40, 60], it means that the Pre_Ber is still not within the range specified by the user after adjusting the roll-off factor within [0,20] and adjusting the optical power at the transmitter-side within (20, 40]. At this time, the OA gain is configured according to the states of all single-boards in the whole system and timing is continued (i.e., Flag++).
At Step 6, if the Flag is greater than 60, it means that the above adjustments cannot reduce the Pre_Ber. At this time, the user is reminded to optimize the system and end the process.
(4) A command executor, which is responsible for executing the adjustment instructions issued by the core module, including the adjustment of the transmission optical power, the adjustment of the roll-off factor and the adjustment of the OA gain coefficient at the transmitter-side. Herein, the adjustment of the power and the adjustment of the roll-off factor made by the executor are both performed on the service single-board, while the adjustment of the OA gain would be performed on the OA board.

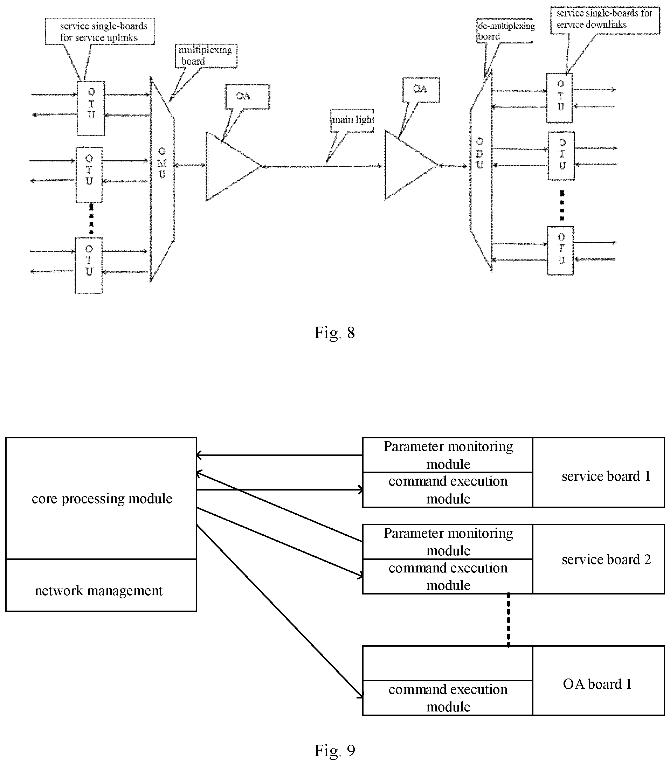

A structure diagram of the overall optical communication system is shown in Fig. 8. Multi-channel optical signals sent by multiple transmitter sides of service single-boards for service uplinks form main light via multiplexing board and OA. After the main light reaches the service downlink, multi-channel optical signals from multiple service single-boards for the service uplink are obtained via OA and de-multiplexing board, which are sent to multiple receiver sides of service single-boards for service downlinks respectively.

A structure of the whole feedback system is shown in Fig. 9. In the whole feedback regulation system, the OTN service single-board is responsible for detecting the bit error rate before correction for the reverse insertion at the downstream single-board, and uniformly reporting the bit error rate before correction to the core processing module deployed and executable in the network management server. After statistics and judgment by the core processing module, it determines to adjust the roll-off factor, luminous power for transmission or gain coefficient of the OA board. Herein, the adjustments of the luminous power, roll off coefficient and other characteristic functions of the transmitter-side may be completed by sinking to OTN service single-boards. However, the adjustment of the OA board gain would be completed in the master control or network management server as such adjustment involves multiple service single-boards.

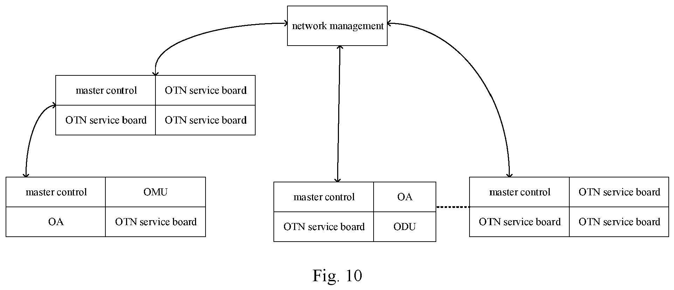

The physical connection relationship of various components is shown in Fig. 10, and there is no structural difference between the system and the normal optical system, the service single-board is connected with the network management through the master control. Herein, the master may not only be directly connected with the network management through the network cable, but also communicate with the network management in the form of a slave sub-rack. The service single-board, OA and multiplexing/de-multiplexing board are all inserted in the same sub-rack.

During specific implementation, the configuration is as follows:
1) the Pre_BER detection unit is deployed at the receiver-side, and the Pre_BER value is reversely inserted in a 5 seconds task, that is, the detection and reverse insertion tasks are executed periodically(5S) at the receiver-side, as shown in Fig. 3.
2) a floating range [L _Level, H_Level] of the bit error rate before correction expected by the link is configured at the network management.
3) the monitoring system of the whole system is configured in the network management, and the command execution module is deployed on the OTN board and OA board respectively, as shown in Fig. 9.

For example, the existing technology does not have the function of automatically adjusting the OSNR of the receiver-side. In the current engineering application, the OSNR tolerance of the whole system will be considered in the optical system design, so that the system has a higher margin. After the design is completed and constructed, the luminous power, the roll-off factor and the OA gain of the optical module will not be changed. With the change of optical link, the user needs to manually adjust the above parameters when system parameters need to be adjusted. Low-rate service does not require high OSNR of the whole system, and the whole optical system is easy to obtain large tolerance. Whether the system being automatically adjusted has little influence on the application of the whole system. However, with the application of 200G or even higher speed services, the whole optical system has higher requirement for OSNR, so it is particularly important to automatically adjust the transmitter-side parameter to ensure the stability of the whole system.

According to some embodiments of the present disclosure, the floating range of the bit error rate before correction is configured at the network management after connection is established according to the optical system structure diagram during the project starting process. After the service is opened, the whole optical system may automatically adjust the parameters such as luminous power, roll-off factor and OA gain according to the feedback value of the bit error rate before correction.

As another example, with the use of communication system, long-distance optical fiber will be cut off in many cases, and then fused again, resulting in worse OSNR of the whole optical communication system.

According to the embodiment of the present disclosure, after the optical fiber is cut off in the engineering field, the whole communication system may automatically adjust parameters such as luminous power, roll-off factor, OA gain and the like when the link is restored. If it is adjusted to the maximum and still fails to meet the set floating range of the bit error rate before correction, a prompt message will be reported to remind the user to further optimize the link. The whole reaction process takes only 5 minutes, which can improve the maintainability of the whole optical system.

To sum up, the embodiment of the present disclosure has the following technical effects:
1. In the project starting process, the user may set an ideal floating range of the bit error rate before correction, so that the system is automatically adjusted to a relatively stable state, which saves the steps of manual calculation and tuning of the system and improves the service life and stability of the whole system.
2. In the embodiment of present disclosure, when the optical path changes due to external reasons, the OSNR of the system may be automatically adjusted, thereby ensuring the stability of the system and being beneficial to prolong the service life of the optical module.
3. In the embodiment of present disclosure, when the OSNR is unable to be further tuned, an alarm information may be provided to prompt the user to tune the system and avoid actual economic losses.
4. In the feedback adjustment technology for receiver only, the receiver-side feedback adjustment can only make the optical module receive the recovery signal more efficiently, which cannot adjust the transmission characteristics of the whole optical system from the system level. Compared with this, in the embodiment of present disclosure, the optical system is tuned from the system level to solve the problem that the optical system cannot be tuned from the whole system, and the optical system is adjusted at the system level by utilizing the reserved overhead, which can greatly tune the transmission characteristics of the whole optical system, and realizes the intelligence and automation of the optical network.

In the whole optical system of the embodiments of the present disclosure, the transmitter-side parameter may be automatically adjusted according to the bit error rate before correction from feedback, so as to make the optical system support high-speed service transmission of the beyond 100G to the maximum extent, and ensure the stability and service life of the optical system.

Although the present disclosure has been described in detail above, the present disclosure is not limited thereto, and those skilled in the art may make various modifications according to the principles of the present disclosure. Therefore, all modifications made in accordance with the principles of the present disclosure should be understood as falling within the scope of protection of the present disclosure.

## Claims

1. A method for feedback tuning of a beyond 100G WDM transmission system, comprising:
acquiring a bit error rate before correction of a link from a downstream of the link;
determining whether the link meets a transmission requirement of a beyond 100G service according to the bit error rate before correction; and
adjusting a transmitter-side parameter used for optical signal transmission at an upstream of the link when it is determined that the link does not meet the transmission requirement of the beyond 100G service.

2. The method according to claim 1, wherein acquiring the bit error rate before correction of the link from the downstream of the link comprises:
detecting an optical signal sent from the downstream of the link to the upstream of the link to obtain the bit error rate before correction of the link inserted into the optical signal at the downstream of the link;
or, detecting the optical signal sent from the downstream of the link to the upstream of the link to obtain a coding information, and obtaining the bit error rate before correction of the link corresponding to the coding information according to a preset coding and decoding rule table.

3. The method according to claim 1, wherein determining whether the link meets the transmission requirement of the beyond 100G service according to the bit error rate before correction comprises:
determining that the link does not meet the transmission requirement of the beyond 100G service when the bit error rate before correction is not within a range of a preset expected bit error rate before correction.

4. The method according to claim 1, wherein the transmitter-side parameter comprises a roll-off factor, adjusting the transmitter-side parameter used for the optical signal transmission at the upstream of the link when it is determined that the link does not meet the transmission requirement of the beyond 100G service, comprises:
adjusting the roll-off factor according to a performance of an optical module at the upstream of the link.

5. The method according to claim 4, wherein the transmitter-side parameter further comprises a transmission optical power, adjusting the transmitter-side parameter used for the optical signal transmission at the upstream of the link when it is determined that the link does not meet the transmission requirement of the beyond 100G service, further comprises:
adjusting the transmission optical power under a requirement of maintaining a stability of the WDM transmission system.

6. The method according to claim 5, wherein the transmitter-side parameter further comprises an optical amplifier gain, adjusting the transmitter-side parameter used for optical signal transmission at the upstream of the link when it is determined that the link does not meet the transmission requirement of the beyond 100G service, further comprises:
adjusting the optical amplifier gain and the transmission optical power according to states of all single-boards of the WDM transmission system.

7. A device for feedback tuning of a beyond 100G WDM transmission system, comprising:
an acquisition module, configured to acquire a bit error rate before correction of a link sent from a downstream of the link;
a judgment module, configured to determine whether the link meets a transmission requirement of a beyond 100G service according to the bit error rate before correction;
an adjustment module, configured to adjust a transmitter-side parameter used for optical signal transmission at an upstream of the link when it is determined that the link does not meet the transmission requirement of the beyond 100G service.

8. An apparatus for feedback tuning of a beyond 100G WDM transmission system, comprising: a processor and a memory coupled to the processor; the memory storing a program for feedback tuning of the beyond 100G WDM transmission system executable on the processor, which, when executed by the processor, implements steps of the method for feedback tuning of the beyond 100G WDM transmission system according to any of claims 1 to 6 .

9. A beyond 100G WDM transmission system, comprising:
a service single-board for a downstream of a link, configured to detect an optical signal from an upstream of the link to obtain a bit error rate before correction of the link, insert the bit error rate before correction into the optical signal sent to the upstream of the link and send the optical signal to the upstream of the link;
a service single-board for the upstream of the link, configured to detect the optical signal from the service single-board for the downstream of the link to obtain the bit error rate before correction of the link and send the bit error rate before correction to a network management server;
the network management server, configured to acquire the bit error rate before correction of the link from the downstream of the link by using the service single-board for the upstream of the link, determine whether the link meets a transmission requirement of the beyond 100G service according to the bit error rate before correction, and adjust a transmitter-side parameter used for optical signal transmission at the upstream of the link when it is determined that the link does not meet the transmission requirement of the beyond 100G service.

10. A storage medium storing a program for feedback tuning of a beyond 100G WDM transmission system, which,when executed by a processor, implements steps of the method for feedback tuning of the beyond 100G WDM transmission system according to any of claims 1 to 6 .
